# FASCICULE DE BREVET EUROPEEN

(11) **EP 1 031 926 B1**
(45) Date de publication et mention de la délivrance du brevet: **26.09.2007**
(21) Numéro de dépôt: 00400461.0
(22) Date de dépôt: 21.02.2000
(51) Int. Cl.: G06F 9/46

(54) **Procédé de communication entre objects distants**
Verfahren zur Kommunikation zwischen Fernobjekten
Communication method between remote objects

(30) Priorité: 25.02.1999 FR 9902358
(43) Date de publication de la demande: 30.08.2000
(73) Titulaire: Alcatel Lucent, 75008 Paris (FR)
(72) Inventeur: Pietre, Armel, 75015 Paris (FR); Banctel, Fabrice, 91190 Gif-sur-Yvette (FR); Feray, Alexandre, 31000 Toulouse (FR)
(74) Mandataire: Sciaux, Edmond

(56) Documents cités:
- EP-A- 0 860 776
- ROBERT ORFALI ET AL: "The Essential Distributed Objects Survival Guide" 1996 , ESSENTIAL DISTRIBUTED OBJECTS SURVIVAL GUIDE,XX,XX, PAGE(S) 203-215 XP002108734 * page 206, ligne 26 - ligne 35 *
- TRIPATHI A ET AL: "TYPE MANAGEMENT SYSTEM IN THE NEXUS DISTRIBUTED PROGRAMMING ENVIRONMENT" PROCEEDINGS OF THE ANNUAL INTERNATIONAL COMPUTER SOFTWARE AND APPLICATIONS CONFERENCE. (COMPSAC),US,WASHINGTON, IEEE COMP. SOC. PRESS, vol. CONF. 12, 5 - 7 octobre 1988, pages 170-177-177, XP000284835

## Description

La présente invention concerne un procédé de communication entre objets distants, basé sur un gestionnaire d'objets distribués ORB, acronyme anglo-saxon pour *Object Request Broker*.

On peut citer comme ORB particulièrement connus et utilisés, CORBA acronyme anglais pour *Common Object Request Broker Architecture* et DCOM pour *Distributed Component Object Model.* CORBA est par exemple décrit dans le chapitre 11 de l'ouvrage de Robert Orfali et al. «The Essential Distributed Objects Survival Guide», 1996.

Nombre d'applications utilisent un tel environnement. On peut citer à titre d'exemple les applications de supervision en télécommunication ou transport, les applications constituant un réseau intelligent...

Dans un environnement d'objets distribués, une application peut utiliser différents serveurs, pour fournir des services à des clients. On appelle processus client, un programme qui utilise des services, et processus serveur, un programme qui offre des services à des clients. Un objet du processus client peut solliciter un service du serveur en lui envoyant un message correspondant. Un objet correspondant du serveur exécute le service et renvoie le cas échéant une réponse au demandeur. La communication entre ces deux objet distants se fait en pratique selon un protocole objet-objet.

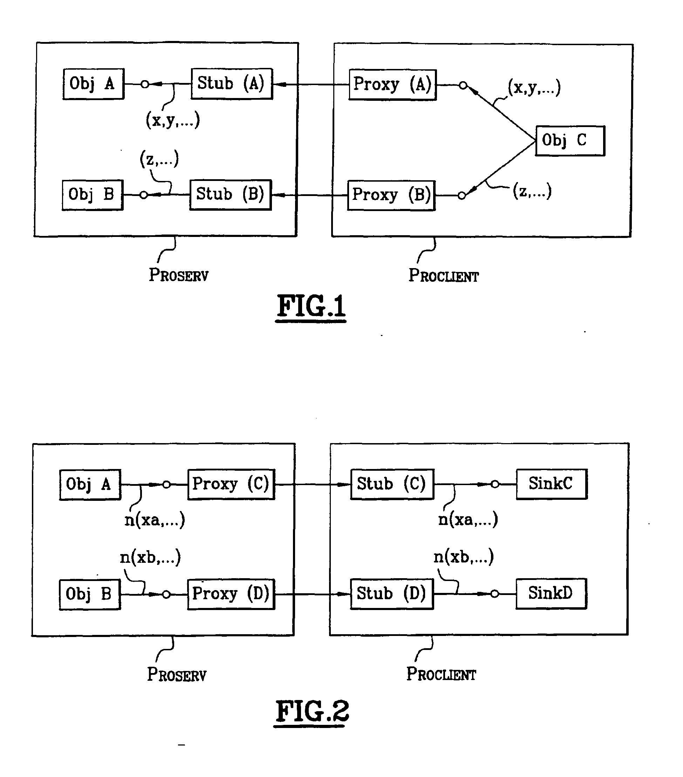

Selon ce protocole dont le principe de fonctionnement est représenté sur la figure 1, lorsqu'un objet ObjC d'un processus client PROCLIENT sollicite un service quelconque sur un objet serveur donné d'un processus serveur, le message correspondant passe par une paire d'éléments représentants de cet objet. C'est cette paire qui va gérer les appels inter processus correspondants, de manière transparente pour les deux objets distants que sont l'objet client et l'objet serveur.

Par exemple, s'agissant d'un objet ObjA du processus serveur, un élément représentant Proxy(A) de cet objet ObjA est créé dans le processus client et un élément représentant correspondant Stub(A) est créé dans le processus serveur. Tous les messages de l'objet ObjC du processus client à destination de l'objet ObjA du processus serveur et les réponses éventuelles (résultats) à ces messages, passent par cette interface Proxy/Stub du protocole objet-objet.

Ainsi, on a un couple d'éléments représentants Proxy/Stub pour chaque objet d'un processus serveur avec lequel un objet client veut communiquer. Cette terminologie Proxy/Stub correspond à celle de l'environnement DCOM. Elle correspond à la terminologie Stub/Skeleton de l'environnement CORBA. Dans la suite, on garde la terminologie DCOM, mais l'homme du métier saura étendre tout ce qui suit à tout ORB connu.

Sur la figure 1, on a ainsi représenté deux paires d'éléments représentants Proxy(A)/Stub(A), et Proxy(B)/Stub(B), pour l'accès respectif par un objet client ObjC à différents services fournis par des objets ObjA et ObjB du processus serveur.

Ce protocole objet-objet s'applique aussi bien à des messages transmis par des objets serveurs vers des objets clients. Un service de notification supporté par l'ORB permet en effet à un objet client d'un processus client de s'inscrire pour recevoir des notifications de processus serveurs. Un exemple typique d'utilisation d'un tel service de notification concerne les applications de supervision, dans lesquelles les clients veulent être informés de changements de propriétés d'objets. Suivant le protocole objet-objet, et comme représenté schématiquement sur la figure 2, quand un objet client s'est enregistré pour être un objet collecteur SinkC de notifications d'un objet ObjA d'un processus serveur PROSERV, les notifications émises par cet objet serveur vers cet objet client sont transmises via une paire d'éléments représentants de l'objet collecteur. Cette paire comprend un élément représentant Proxy(C) du client collecteur SinkC dans le processus serveur PROSERV et un élément représentant Stub(C) correspondant dans le processus client PROCLIENT.

Un message de notification n(xa, ...) de l'objet serveur ObjA vers le client collecteur SinkC est transmis à l'élément représentant Proxy(C) qui les envoie sur l'élément représentant Stub(C) correspondant du client collecteur SinkC qui reçoit ainsi le message de notification n(xa, ...) qui lui est destiné, sans que les objets ObjA et SinkC aient à connaître leur localisation respective.

L'avantage d'un tel protocole objet-objet est que les objets n'ont pas à savoir où se localisent les objets avec lesquels ils échangent des messages. Avec ce protocole, l'ORB cache en quelque sorte la localisation des objets, ce qui simplifie considérablement les accès aux objets où qu'ils se trouvent. On ne détaillera pas plus avant ces paires d'éléments représentants bien connues de l'homme du métier. Une telle architecture, basée sur une paire d'éléments représentants pour effeciure la communication entre les objets d'un premier processus et ceux d'un second processus est par exemple décrit dans la demande de brevet EP 0 860 776

Dans certaines applications, les messages échangés suivant ce protocole dans un sens ou l'autre peuvent être très nombreux.

On peut prendre plusieurs exemples. Si on considère le service dit « *life cycle service* » dans la littérature anglo-saxonne, qui permet à un objet client de savoir si un objet serveur est toujours accessible, c'est à dire n'a pas été détruit, ou si le réseau n'est pas en panne, des messages sont envoyés cycliquement par tous les objets clients intéressés sur tous les objets serveurs pour lesquels ils veulent avoir cette information. Or, si le processus serveur est inaccessible, tous les objets serveurs de son processus le sont également.

Si on prend un service dit d'identité par lequel un objet client peut demander à un objet serveur de lui retourner le nom du processus dans lequel il se trouve, tous les objets clients peuvent demander ce service à des objets serveurs qui peuvent être sur un même processus.

Dans un autre exemple, qui concerne le service de notification utilisé notamment en supervision, les messages de notification peuvent être très nombreux concernant des propriétés (activité, état) de divers équipements d'un système.

Un autre exemple est celui des messages d'inscription à un service exécuté par un processus serveur, par exemple un canal de notification. Typiquement, lorsqu'un processus client est créé, il enregistre tout ou partie des objets qu'il contient auprès d'un (ou plusieurs) processus serveur. On comprend alors que le nombre de messages d'inscription peut être très nombreux.

Dans ces exemples, on voit que le nombre d'appels inter processus n'est pas optimisé. Il serait intéressant de réduire le nombre d'appels.

Il est donc intéressant de grouper les messages entre deux processus pour les envoyer en groupe, de manière à réduire les appels inter processus qui sont coûteux et optimiser la communication.

Pour ces raisons, on a prévu pour certains services de centraliser les messages. Ces services de centralisation reçoivent alors tous les messages des processus abonnés au service correspondant et traitent ces messages. Par exemple, un service de centralisation peut modifier les messages, les filtrer, les envoyer périodiquement aux processus destinataires, ....

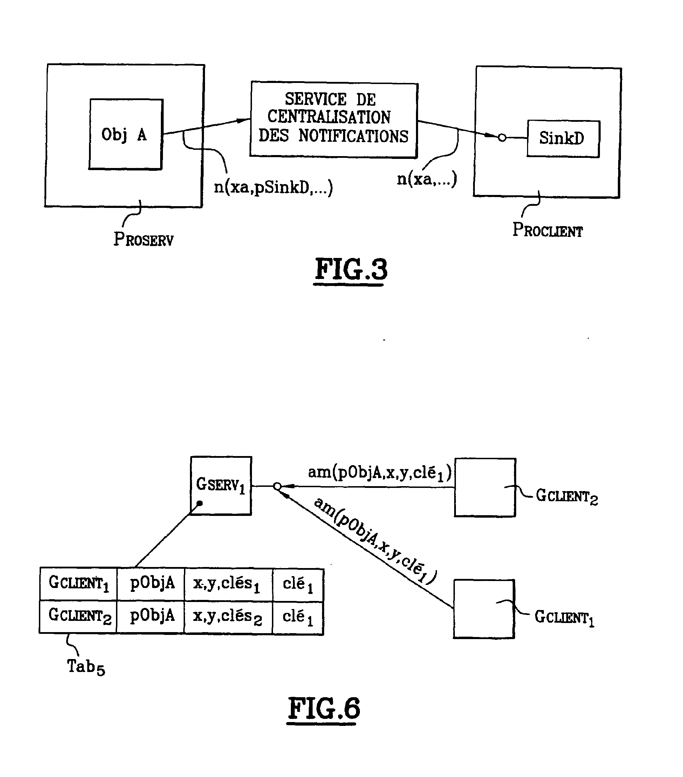

Un tel procédé de communication pour un service de notification est représenté schématiquement sur la figure 3. Avec un tel procédé, un objet ObjA d'un processus serveur, doit passer son message de notification avec un paramètre d'identification de l'objet collecteur SinkD destinataire, typiquement un pointeur pSinkD. L'objet ObjA envoie donc un message de type n(pSinkD, xa,...) et l'objet collecteur SinkD reçoit un message de type n(xa,...). On voit qu'avec un tel service, on perd la transparence du protocole objet-objet : l'objet émetteur doit fournir un pointeur sur l'objet destinataire.

Ce service centralisé est donc un intermédiaire de plus dans le protocole de communication avec lequel on perd l'avantage de la transparence du protocole objet-objet.

Un objet de la présente invention est un procédé de communication entre objets distants qui ne présente pas cet inconvénient.

Selon l'invention, on utilise les mécanismes du protocole objet-objet de l'ORB, c'est à dire sans rentrer dans les mécanismes internes de l'ORB, pour réaliser un protocole de communication permettant la centralisation des messages, tout en gardant la transparence offerte par le protocole objet-objet.

En restant au-dessus de l'ORB, on a un procédé de communication avantageusement portable, c'est à dire applicable à tout ORB.

Dans un environnement ORB, il est en effet possible de modifier les éléments représentants de type Proxy/Stub du protocole objet-objet, selon des mécanismes connus, fonction de l'ORB. Selon l'invention, on utilise cette propriété pour transmettre les messages par des gestionnaires de service centralisé prévus dans chacun des processus.

Selon l'invention, on crée donc un objet gestionnaire dans chacun des processus, pour centraliser les messages relatifs à un service donné.
Pour ce service, on crée un gestionnaire appelant dans le processus appelant, et un gestionnaire récepteur dans le processus destinataire.
Les paires d'éléments représentants sont modifiées pour permettre la transmission des messages relatifs au service considéré reçus par les éléments de type Proxy d'un processus appelant vers le gestionnaire appelant correspondant à ce service, prévu dans ce processus.
Ce gestionnaire appelant peut traiter les messages selon les besoins du service. Par exemple, il peut les filtrer, modifier des paramètres, les trier et les grouper pour les transmettre à des gestionnaires récepteurs correspondants prévus dans les processus destinataires....
Chacun de ces gestionnaires récepteurs des processus destinataires peut ensuite distribuer les messages ainsi reçus aux objets destinataires, ou rendre lui-même le service correspondant. L'invention a donc pour objet un procédé de communication basé sur un gestionnaire d'objets distribués ORB, la transmission de messages d'objets d'un premier processus vers des objets d'un autre processus étant effectuée au travers de paires d'éléments représentants, avec dans chaque paire un premier élément représentant dans le processus appelant et un deuxième élément représentant dans l'autre processus. Ce procédé se caractérise en ce qu'il consiste à modifier les premiers éléments représentants du premier processus pour qu'ils transmettent les messages relatifs à un service donné et envoyés par des objets du premier processus vers des objets d'autres processus, à un gestionnaire appelant correspondant au dit service et prévu dans le premier processus, ce gestionnaire appelant gérant les messages ainsi reçus et transmettant certains de ces messages sur un gestionnaire de récepteur correspondant prévu dans chacun des processus destinataires.

Ce procédé de communication s'applique aussi bien à des services pour lesquels des objets clients passent des messages vers des objets serveurs ou des services pour lesquels des objets serveurs envoient des messages de notification vers des objets clients.

Un autre but de l'invention est de réduire le nombre de messages d'enregistrement émis par les objets d'un processus client à l'adresse d'un processus serveur. Pour cela, l'invention a pour objet un procédé d'inscription d'un processus client auprès d'un processus serveur, tout ou partie des objets de ce processus client émettant chacun un message d'inscription. Le procédé se caractérise en ce que les messages d'inscription sont communiqués au processus serveur conformément au procédé de communication précédemment décrit.

D'autres caractéristiques et avantages de l'invention sont décrits dans la description suivante, faite à titre indicatif et nullement limitatif et en référence aux dessins annexés dans lesquels :
- la figure 1 déjà décrite est un schéma général de la mise en oeuvre d'un protocole objet-objet pour la transmission des messages d'un processus client vers un processus serveur;
- la figure 2 déjà décrite est un schéma général de la mise en oeuvre d'un protocole objet-objet pour la transmission des messages de notification d'un processus serveur vers un processus client;
- la figure 3 déjà décrite représente schématiquement la gestion des messages entre un processus client et un processus serveur et réciproquement par un service de notification centralisé selon l'état de la technique;
- la figure 4 représente schématiquement la gestion des messages selon le procédé de communication de l'invention entre un processus client et un processus serveur;
- la figure 5 représente la gestion des messages selon le procédé de communication de l'invention appliqué à un service de notification; et
- la figure 6 représente schématiquement un mécanisme de modification d'un paramètre des messages.

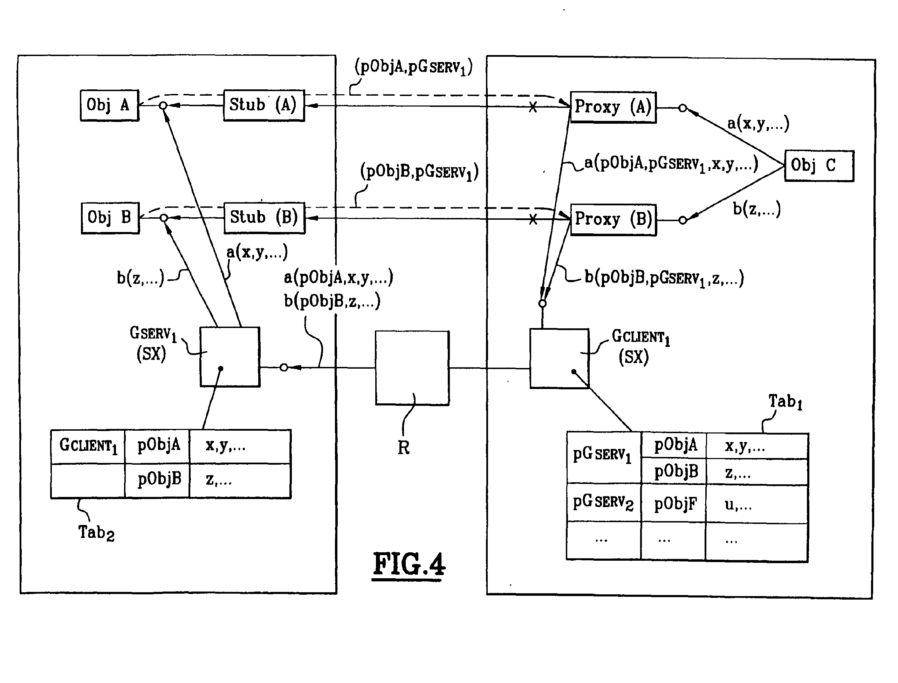

La figure 4 correspond à un premier mode de réalisation de l'invention appliqué à un service donné que l'on note SX, pour la transmission des messages correspondants à ce service d'un objet client ObjC d'un processus client PROCLIENT₁ vers des objets serveurs ObjA et ObjB d'un processus serveur PROSERV₁.

Le processus client peut comprendre différents objets clients. A chacun de ces différents objets clients, peuvent correspondre des éléments représentants de type Proxy/Stub, qui ont été créés lorsque ces objets clients se sont abonnés à différents services sur ces objets.

Dans l'exemple simplifié représenté sur la figure 4, un seul objet client ObjC a été représenté, pour lequel deux paires d'éléments représentants Proxy/Stub ont été créées, Proxy(A)/Stub(A) et Proxy(B)/Stub(B), permettant l'accès à différents services fournis par des objets serveurs ObjA et ObjB qui dans l'exemple appartiennent au même processus serveur PROSERV₁.

Le processus client PROCLIENT₁ comprend en outre un gestionnaire appelant GCLIENT₁ pour le service SX. Ce gestionnaire appelant reçoit des messages relatifs à ce service SX, transmis par les éléments représentants de type Proxy du processus client. Si le message n'est pas relatif au service SX, le premier élément représentant Proxy pourra avoir le comportement standard, qui consiste à diriger ces messages sur le deuxième élément représentant Stub correspondant, ou bien le comportement particulier, spécialisé, selon l'invention, qui consiste à rerouter ces messages vers le gestionnaire appelant d'un service correspondant. Le processus serveur PROSERV₁ comprend un gestionnaire récepteur GSERV₁ du service SX qui reçoit des messages de gestionnaires appelants correspondants (c'est à dire du même service SX), de différents processus appelants et les distribue sur les objets serveurs destinataires.

Les éléments représentants standards Proxy/Stub du protocole objet-objet, créés lorsque les objets clients s'abonnent à des services sur des objets serveurs, sont modifiés pour permettre la mise en relation des gestionnaires appelants et serveurs du service SX selon l'invention. En effet, pour chaque message qu'il reçoit, le gestionnaire appelant d'un service dans un processus client a besoin de connaître non seulement le paramètre d'identification de l'objet serveur distant destinataire mais aussi du gestionnaire récepteur correspondant.

Or l'objet client qui envoie le message ne connaît pas la localisation de l'objet serveur qu'il appelle. Par contre, chaque élément représentant connaît ou peut connaître, par l'objet auquel il est associé, les adresses des objets présents dans le processus où il se trouve. Ainsi, les paramètres d'identification de l'objet serveur destinataire et du gestionnaire récepteur correspondant sont connus (ou peuvent l'être) par l'élément représentant Stub situé dans le processus concerné, ou par l'objet serveur correspondant.

Dans un exemple de mise en oeuvre pratique de l'invention, ces éléments représentants Stub des processus serveurs sont donc modifiés pour que chacun passe ces informations à l'élément représentant Proxy associé. Ainsi, comme représenté par une flèche en pointillé sur la figure 4, l'élément Stub(A) de la paire Proxy(A)/Stub(A) passe à l'élément Proxy(A) les paramètres d'identification pObjA et pGSERV₁ de l'objet serveur ObjA et du gestionnaire récepteur GSERV₁ du processus serveur considéré. Ce passage d'informations peut se faire à la création de la paire d'éléments représentants ou après.

Dans cet exemple de mise en oeuvre du procédé selon l'invention, on se sert donc de la passerelle Proxy/Stub pour rapatrier au niveau des éléments Proxy les informations nécessaires pour permettre la mise en relation des gestionnaires appelants et récepteurs. On notera que d'autres mécanismes peuvent être mis en oeuvre par l'homme du métier. Ainsi, un autre mécanisme peut consister à utiliser directement l'objet serveur destinataire pour fournir ces informations aux éléments Proxy, par exemple, en utilisant des ressources partagées.

Selon l'invention, les éléments représentants Proxy des processus clients sont donc modifiés pour transmettre les messages relatifs au service SX non plus à leur élément représentant Stub correspondant, mais au gestionnaire appelant de ce service prévu dans leurs processus, en passant dans chacun de ces messages les paramètres d'identification de l'objet destinataire et du gestionnaire récepteur correspondant.

Ainsi, si l'objet client ObjC veut envoyer un message du type a(x,y,...) relatif au service SX, à l'objet ObjA du processus serveur PROSERV₁, l'élément représentant Proxy(A) correspondant transmet un message du type a(pObjA, pGSERV₁,x,y,...) au gestionnaire appelant GCLIENT₁ de ce service SX, prévu dans le processus client, au lieu d'envoyer directement le message à l'élément représentant Stub(A).

Le gestionnaire appelant dans le processus client reçoit ainsi tous les messages relatifs au service SX en provenance des objets clients du processus client et destinés à n'importe quel objet serveur de n'importe quel processus serveur.

Selon le service SX considéré, il peut traiter les messages selon les besoins du service. Par exemple, il peut filtrer, trier et grouper ces messages par processus serveur, pour envoyer à chacun des processus serveurs un groupe de messages reçus correspondant, selon des politiques de groupement et d'envoi des messages prédéfinis.

Il peut ainsi envoyer les messages par paquets, de façon asynchrone : quand le gestionnaire récepteur à reçu le paquet de messages, il libère le gestionnaire appelant qui peut s'occuper de la gestion d'autres messages. Lorsque le gestionnaire appelant envoie les messages par paquets, cet envoi peut-être cyclique.
Si l'envoi est cyclique, le cycle peut-être un cycle défini par chaque gestionnaire appelant, ou par le gestionnaire récepteur.

A un envoi cyclique peut s'ajouter un envoi déclenché par un événement particulier, comme par exemple lorsqu'un certain nombre de messages à été reçu.

Il peut aussi filtrer ces messages pour n'en transmettre que certains, selon des critères prédéfinis, comme on le verra par la suite, dans un exemple d'application à un service d'identification.

Il peut aussi envoyer un message vers un gestionnaire récepteur correspondant et attendre un résultat en retour, selon un procédé de transmission synchrone.

De nombreuses variantes de mise en oeuvre pratique existent donc, qui dépendent essentiellement des services auxquels on applique l'invention.

Sur la figure 4 on a ainsi représenté une application de l'invention à un service SX quelconque pour lequel des objets clients envoient des messages sur des objets serveurs. Selon le service considéré, il peut y avoir un résultat à retourner à l'objet client, ou pas.

Dans le cas où, pour le service SX considéré, il y a un résultat à retourner, les résultats suivent normalement le chemin inverse de transmission, jusqu'à l'objet appelant : ObjA→GSERV₁→GCLIENT₁→Proxy(A)→ObjC. Ils sont alors sensiblement traités comme les messages, par les gestionnaires récepteur et appelant, selon le processus inverse : le gestionnaire récepteur reçoit les résultats directement des objets serveurs ; il peut les relier aux messages auxquels ils correspondent, les trier et les grouper. Il peut les envoyer par paquet aux gestionnaires appelants correspondants, qui vont à leur tour distribuer ces résultats aux objets clients correspondants. L'envoi peut-être cyclique, déclenché par un événement particulier, ... Tout ce qui a été dit précédemment pour la gestion des messages par les gestionnaires s'applique aussi bien à la gestion des résultats correspondants.

Pour assurer cette gestion des messages selon l'invention, et le cas échéant des résultats, on prévoit que les gestionnaires utilisent des structures de données adaptées (tables, piles, ...).

Sur la figure 4, on a ainsi représenté une structure de données TAB1, sous forme d'une table, gérée par le gestionnaire appelant GCLIENT₁. Cette structure de données contient, à un moment donné, la liste des messages reçus, par objet destinataire pour chaque gestionnaire récepteur concerné. Dans l'exemple, le gestionnaire appelant GCLIENT₁ contient deux messages pour un gestionnaire récepteur identifié par le pointeur pGSERV₁ et un message pour un autre gestionnaire récepteur identifié par un pointeur pGSERV₂.

Le gestionnaire récepteur GSERV₁ du processus serveur peut lui-même avoir à gérer une structure de données, comme la structure de données TAB2 représentée sur la figure 4, dans laquelle il va mémoriser les messages reçus. Cela lui permet notamment de trier les messages qu'il reçoit par objets serveur destinataires et les envoyer à ces objets serveurs. Cela lui permet aussi de gérer les résultats correspondants qu'il pourra recevoir en retour, pour les retourner aux gestionnaires appelants correspondants.

Ainsi chaque gestionnaire gère une structure de données (ou plusieurs) selon ses besoins. Il peut y mémoriser les messages, les résultats et des informations liées à sa gestion propre, comme par exemple un indicateur de transmission du message, un indicateur d'attente de résultat, ...

Par ailleurs, les gestionnaires appelants et récepteurs peuvent appliquer des transformations du type filtrage, compression ou encore de modifier certains paramètres des messages et ou de résultats correspondants, et cela à chaque étape de transmission de ces messages et/ou de ces résultats. Cette possibilité sera plus particulièrement expliquée ci-après dans un exemple d'application de l'invention au service de notifications. Mais elle peut-être utilisée pour tous les services auxquels on applique l'invention, pour les besoins du service en général et pour optimiser les appels inter processus.

Dans la mise en oeuvre d'un procédé de communication selon l'invention, on peut prévoir que le gestionnaire récepteur du processus serveur rend lui-même le service correspondant. A la centralisation de la transmission des messages (et le cas échéant des résultats), on ajoute alors la centralisation du service lui-même.

Cette variante d'application de l'invention s'adresse typiquement à des services comme le service d'identification des processus serveurs, qu'un objet client utilise pour savoir sur quel processus se trouve l'objet serveur auquel il s'adresse, ou le service de détection de faute, qu'un objet client utilise pour savoir si l'objet serveur auquel il s'adresse est toujours accessible (c'est à dire, si il n'a pas disparu ou si le réseau n'est pas en panne).

En effet, si on prend l'exemple du service d'identification, un objet centralisé peut très bien rendre le service à la place de chaque objet serveur. Dans l'invention, on prévoit donc, dans cette variante, que le service est rendu par le gestionnaire récepteur lui-même. Ainsi, pour ce service, le code programme correspondant n'a à être implémenté que dans ce gestionnaire et non plus dans chacun des objets serveurs. C'est donc très avantageux. En outre, cela se fait de manière transparente pour les objets clients.

Dans cet exemple d'application au service d'identification, on peut aussi centraliser une partie du service sur le gestionnaire appelant, de manière à réduire de façon significative les appels inter processus. En effet, le gestionnaire appelant peut mémoriser dans sa structure de données, l'identité des processus serveurs au fur et à mesure qu'il les connaît. Ainsi, si il a déjà l'identité d'un processus pour lequel il reçoit un message de demande d'identité, il retourne lui-même le résultat attendu à l'objet client. Ainsi, pour chaque processus serveur pour lequel il est sollicité, le gestionnaire appelant ne transmettra une demande d'identité correspondante au gestionnaire récepteur qu'une seule fois, à la première demande qu'il reçoit.

Dans cet exemple d'application, on notera que l'on ne transmet pas nécessairement de paquets de messages entre les gestionnaires ; le procédé de communication peut alors être synchrone, chaque élément intervenant émetteur d'un message restant en attente du résultat en retour : l'objet client qui émet le message, le gestionnaire appelant qui le reçoit et qui le transmet au gestionnaire récepteur dans le cas où il ne connaît pas le résultat.

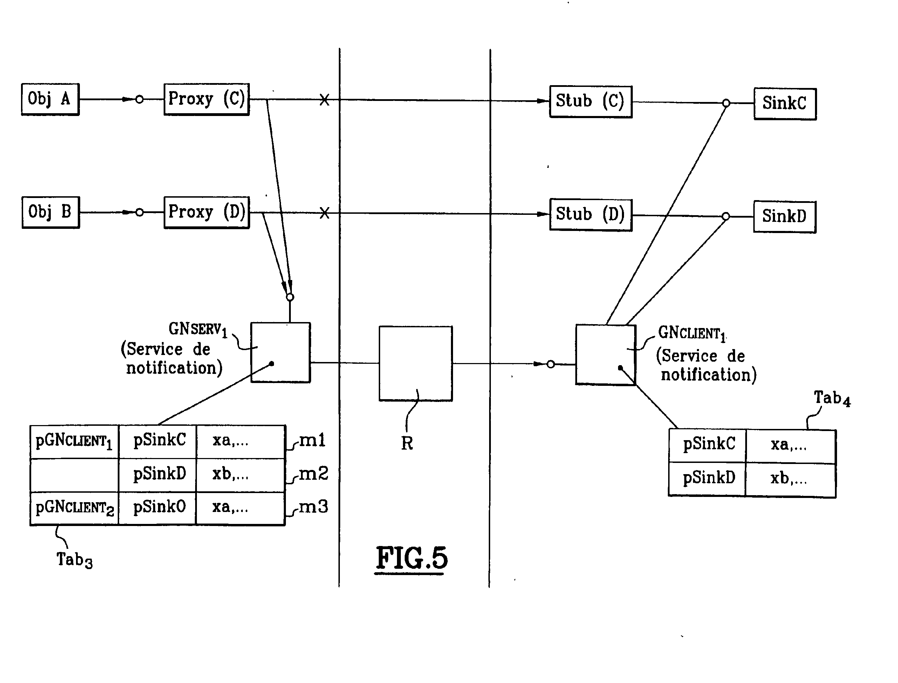

Sur la figure 5, on a représenté une application de l'invention à un autre exemple de service, le service de notifications. Dans ce cas, les gestionnaires appelants sont dans les processus serveurs et les gestionnaires récepteurs dans les processus clients. Chaque processus serveur, respectivement client, contient un unique gestionnaire appelant, respectivement récepteur, pour ce service de notification selon l'invention. Chaque processus serveur peut envoyer des notifications à différents processus clients par son gestionnaire appelant. Chaque processus client peut recevoir des notifications de différents processus serveur par son gestionnaire récepteur correspondant.

Dans l'exemple représenté sur la figure 5, on a ainsi, pour ce service de notifications, un gestionnaire appelant GNSERV₁ dans le processus serveur PROSERV₁ et un gestionnaire récepteur GNCLIENT₁ dans le processus client.

Le gestionnaire appelant reçoit tous les messages de notifications de tous les objets serveurs de ce processus qui émettent ces messages. Le gestionnaire récepteur peut recevoir des notifications de gestionnaires appelants de différents processus. Il distribue les notifications reçues aux objets collecteurs destinataires. Plus généralement, on obtient cette indépendance entre les deux processus, dès lors que les messages (ou les résultats en retour) sont envoyés par paquets au moins entre les deux gestionnaires. Selon le type de service concerné, l'asynchronisme peut n'être introduit qu'au niveau des gestionnaires, ou bien à tous les niveaux de la chaîne de transmission. Pour introduire cet asynchronisme, l'homme de l'art pourra utiliser les techniques classiques (processus légers (threads dans la littérature anglo-saxonne), interruptions...).

Le gestionnaire appelant doit trier les différents messages de notification qu'il reçoit des objets serveurs de son processus serveur, selon le processus client destinataire et pour chaque processus destinataire, selon l'objet collecteur destinataire, pour les envoyer aux gestionnaires appelants destinataires, par exemple par paquets, en leur appliquant ou non une transformation préalable. Il utilise pour cela une structure de données adaptées, notée TAB3 sur la figure 5. Cette structure de données contient dans l'exemple 3 messages ; deux messages m1 et m2 pour le processus client PROCLIENT₁, l'un, m1, en provenance de l'objet serveur ObjA pour un objet collecteur SinkC, l'autre, m2, en provenance d'un objet serveur ObjB, pour un objet collecteur SinkD ; et un dernier message, m3, en provenance de l'objet serveur ObjA pour un objet collecteur SinKO d'un autre processus client PROCLIENT₂ non représenté.

De préférence, le gestionnaire appelant du processus serveur regroupe les messages destinés au gestionnaire récepteur correspondant d'un même processus client pour les envoyer par paquet, en une seule invocation. A cette occasion, on a vu qu'il peut aussi appliquer des transformations, comme par exemple des mécanismes de filtrage ou de compression sur le paquet de messages qu'il envoie. Il peut aussi modifier certains paramètres.

Par exemple, il peut filtrer les messages en ne transmettant que ceux qui correspondent aux dernières modifications de certaines propriétés. Dans ce cas, il supprime les messages antérieurs. Il peut alors modifier un paramètre du message de type indicateur, qui signale selon son état si un filtrage a été appliqué ou pas.

Comme représenté sur la figure 5, le gestionnaire récepteur d'un processus client peut lui aussi gérer une structure de données TAB4 pour stocker les couples message de notification/objet collecteur qu'il reçoit de gestionnaires appelants. Il peut lui aussi effectuer des traitements sur les messages et/ou modifier certains paramètres de ces messages avant de les distribuer aux objets concernés.

On a vu plus haut que le gestionnaire appelant ou récepteur d'un processus a la possibilité de modifier des paramètres des messages ou de résultats correspondants, pour faciliter sa gestion et pour les besoins du service en général. Un exemple d'un tel paramètre qui peut être modifié par un gestionnaire est le paramètre indicateur pour le filtrage vu précédemment.

Un autre exemple, concerne les paramètres de type clés. En effet, un élément qui envoie de nombreux messages divers, utilise habituellement un mécanisme d'attribution de clés. Une clé est un identifiant attribué par le client au moment de la connexion. Cette clé est transmise dans la notification et permet au client d'identifier à quelle connexion correspond la notification.

Dans l'invention, la transmission des messages étant centralisée par des gestionnaires, ces gestionnaires reçoivent des messages émis par des éléments différents qui chacun applique son propre mécanisme d'attribution de clés. Chaque gestionnaire peut ainsi se retrouver avec des messages utilisant la même clé.

Selon l'invention, on prévoit alors que chaque gestionnaire appelant ou récepteur utilise son propre mécanisme d'attribution de clés des messages reçus. Dans l'exemple représenté sur la figure 6, un gestionnaire récepteur reçoit ainsi un message d'un gestionnaire appelant GCLIENT₁ d'un processus client pour un objet serveur ObjA. Ce message est de type a(pObjA,X,Y,clé1,...) où clé1 est la clé correspondante, attribuée par le gestionnaire appelant GCLIENT₁.

Le gestionnaire récepteur reçoit un autre message d'un gestionnaire appelant GCLIENT₂ d'un autre processus client, pour le même objet serveur ObjA. Ce message est de type a(pObjA,X,Y,clé1,...) où clé1 est la clé attribuée par le gestionnaire appelant GCLIENT₂.

Le gestionnaire récepteur, quand il reçoit ses messages, peut attribuer une nouvelle clé selon son propre mécanisme d'attribution (par exemple, selon l'ordre d'arrivée des messages). Dans chaque message, il remplace donc la clé reçue par une nouvelle clé attribuée par lui. Il peut garder la correspondance entre cette nouvelle clé et la clé reçue à l'origine, dans la structure de données TUB6 pour pouvoir retourner un résultat éventuel correspondant au gestionnaire appelant avec la clé d'origine. Dans l'exemple représenté sur la figure 5, la nouvelle clé du premier message est ainsi cléₛ₁ tandis que celle du deuxième message est cléₛ₂. Ainsi, d'une manière générale, un gestionnaire appelant ou récepteur peut modifier des paramètres des messages ou de résultats correspondants.

On notera que dans certains cas, le procédé de communication selon l'invention permet de rendre indépendant les deux processus appelant et destinataire. Dans l'exemple du service de notifications, si on regarde la chaîne de transmission correspondante représentée sur la figure 5, lorsqu'un objet envoie un message de notification, c'est le gestionnaire appelant correspondant dans le processus serveur qui le reçoit, et ce dernier libère alors l'objet serveur qui peut faire d'autres choses. Lorsque le gestionnaire appelant décide d'envoyer un paquet de messages de notification à un gestionnaire récepteur, ce dernier réceptionne le paquet, et libère aussitôt le gestionnaire appelant, qui peut s'occuper d'autres paquets, d'autres gestionnaire appelants... Enfin lorsque le gestionnaire récepteur distribue des messages vers un objet client, ce dernier libère le gestionnaire récepteur dès réception.

Avec un procédé de communication selon l'invention, dont différents exemples d'application et de nombreuses variantes viennent d'être décrites à titre purement illustratif, un objet appelant ne sait pas qu'il passe par un gestionnaire appelant et, le cas échéant, un objet destinataire ne sait pas qu'il est appelé par un gestionnaire récepteur.

On notera que l'on peut à tout moment revenir à la communication normale par paire Proxy/Stub standard, par exemple, pour permettre un test unitaire d'un objet serveur. Il suffit dans le processus appelant de remodifier l'élément proxy pour qu'il transmette à nouveau les messages à l'élément représentant Stub correspondant. Le procédé de communication selon l'invention est donc réversible.

On notera que la communication entre un gestionnaire appelant et un gestionnaire récepteur peut suivre le schéma standard par paire Proxy/Stub du protocole objet-objet. Elle peut aussi passer par des ressources partagées R prévues sur l'ORB ou dans le système d'exploitation, comme représenté sur les figures 4 et 5. Ces ressources partagées peuvent être une mémoire, une connexion réseau,...

Enfin, le procédé de communication selon l'invention n'utilise aucun mécanisme interne de l'ORB, ce qui le rend portable, c'est à dire utilisable avec n'importe quel ORB.

Il permet de réduire le nombre d'appels inter processus pour chaque service auquel il est appliqué, grâce au mécanisme d'envoi par paquets des messages avec ou sans transformation (filtrage, compression), et le cas échéant, grâce à la centralisation du service lui-même, tout en gardant la transparence du protocole objet-objet.

Dans certains cas, comme par exemple dans le cas du service de notifications, il permet avantageusement de rendre indépendant le processus appelant et le processus destinataire, puisque dans ce cas, il introduit un asynchronisme entre ces processus.

En pratique, le procédé de communication selon l'invention laisse une grande liberté de mise en oeuvre, qui permet de s'adapter aux diverses applications qui peuvent se présenter.

Il est notamment possible d'utiliser le procédé selon l'invention afin de permettre l'enregistrement des objets d'un processus client auprès d'un processus serveur. Cette étape d'enregistrement permet ensuite au processus serveur de transmettre aux objets s'étant enregistrés des messages de notification ainsi qu'évoqué précédemment. Typiquement, le nombre d'objets désirant s'enregistrer auprès d'un même processus serveur peut être très élevé au sein d'un processus client. Il convient donc de réduire les messages d'enregistrement afin de ne pas surcharger les moyens de communication sous-jacents (notamment le réseau informatique).

Pour cela, il est possible d'utiliser le procédé de l'invention : chaque message d'enregistrement est alors transmis à un gestionnaire appelant par un élément représentant (Proxy(A)) associé. Ce gestionnaire appelant peut alors transmettre l'ensemble des données relatives aux demandes d'enregistrement en un seul message d'enregistrement auprès du processus serveur.

## Revendications

1. Procédé de communication basé sur un gestionnaire d'objets distribués ORB, la transmission de messages d'objets d'un premier processus vers des objets d'un autre processus étant effectuée au travers de paires d'éléments représentants, avec dans chaque paire un premier élément représentant dans le processus appelant et un deuxième élément représentant dans l'autre processus, **caractérisé en ce qu'**il consiste à modifier les premiers éléments représentants (Proxy(A)) du premier processus pour qu'ils transmettent les messages relatifs à un service donné (SX) et envoyés par des objets (ObjC) du premier processus (GCLIENT₁) vers des objets (ObjA) d'autres processus (P_{ROSERV1}), à un gestionnaire appelant (GCLIENT₁) correspondant au dit service et prévu dans le premier processus, ce gestionnaire appelant gérant les messages ainsi reçus et transmettant certains de ces messages sur un gestionnaire de récepteur correspondant (GSERV₁) prévu dans chacun des processus destinataires.

2. Procédé de communication selon la revendication 1, **caractérisé en ce que** chacun des premiers éléments représentants modifiés (Proxy(A)) transmet les messages relatifs au dit service au gestionnaire appelant (GCLIENT₁) correspondant avec un paramètre d'identification (pGSERV₁) du gestionnaire récepteur (GSERV₁) correspondant dans le processus destinataire (PROSERV₁) et un paramètre d'identification (pObjA) de l'objet destinataire (ObjA).

3. Procédé de communication selon la revendication 2, **caractérisé en ce que** lesdits paramètres sont fournis au premier élément représentant (Proxy(A)) par le deuxième élément représentant associé (Stub(A)) ou l'objet destinataire(ObjA).

4. Procédé de communication selon l'une des revendications 1 à 3, **caractérisé en ce que** le gestionnaire récepteur d'un processus destinataire (PROSERV₁) transmet les messages reçus de gestionnaires appelants aux objets concernés de ce processus.

5. Procédé de communication selon la revendication 4, **caractérisé en ce que** le gestionnaire récepteur reçoit des résultats en retour des messages, qu'il retransmet aux gestionnaires appelants concernés.

6. Procédé selon l'une quelconque des revendications 1 à 3, **caractérisé en ce que** le gestionnaire récepteur (GSERV₁) d'un message rend lui-même le service correspondant, en retournant le cas échéant un résultat correspondant au gestionnaire appelant concerné.

7. Procédé de communication selon l'une quelconque des revendications 1 à 6, **caractérisé en ce que** la transmission des messages et/ou des résultats correspondants entre un gestionnaire appelant et un gestionnaire récepteur s'effectue au moyen d'une paire d'éléments représentants.

8. Procédé de communication selon l'une quelconque des revendications 1 à 6, **caractérisé en ce que** la transmission des messages entre un gestionnaire appelant et un gestionnaire récepteur s'effectue au moyen de ressources partagées (R).

9. Procédé de communication selon l'une quelconque des revendications précédentes, **caractérisé en ce qu'**un gestionnaire appelant ou récepteur modifie des paramètres des messages et/ou de résultats correspondants.

10. Procédé de communication selon l'une quelconque des revendications précédentes, **caractérisé en ce que** les messages et/ou des résultats correspondants sont transmis par paquets entre les gestionnaires appelants et récepteurs, avec ou sans application d'une transformation préalable.

11. Procédé de communication selon la revendication 10, **caractérisé en ce que** la transmission des paquets est cyclique, selon un cycle défini par le gestionnaire récepteur ou appelant.

12. Procédé de communication selon la revendication 11, **caractérisé en ce que** la transmission des paquets est en outre déclenchée par l'occurrence d'un événement déterminé.

13. Procédé de communication selon l'une quelconque des revendications précédentes, **caractérisé en ce qu'**il est appliqué à au moins un service selon lequel les processus appelants sont des processus clients et les processus destinataires sont des processus serveurs.

14. Procédé de communication selon l'une quelconque des revendications 1 à 12, **caractérisé en ce qu'**il est appliqué à au moins un service selon lequel les processus appelants sont des processus serveurs et les processus destinataires sont des processus clients.

15. Procédé de communication selon l'une quelconque des revendications précédentes, **caractérisé en ce que** l'environnement ORB est un environnement CORBA.

16. Procédé de communication selon l'une quelconque des revendications 1 à 14, **caractérisé en ce que** l'environnement ORB est un environnement DCOM.

17. Procédé d'inscription d'un processus client auprès d'un processus serveur, ledit processus client contenant un ensemble d'objets, chacun desdits objets émettant un message d'inscription, **caractérisé en ce que** lesdits messages d'inscription sont communiqués audit processus serveur conformément à l'une des revendications précédentes.

## Claims

1. A communication method based on an ORB distributed object manager, in which messages are transmitted from objects of a first process to objects of another process via pairs of representative elements, each pair of representative elements includes a first representative element in said calling process and a second representative element in said other process, the method being **characterized in that** it consists in modifying first representative elements (Proxy(A))of said first process so that they transmit messages relating to a given service (SX) and sent by objects (ObjC) of said first process (Gclient₁)to objects (ObjA) of other processes (ProServ₁) to a calling manager (Gclient₁) corresponding to said service and provided in said first process, said calling manager managing messages received in this way and transmitting some of them to a corresponding receiving manager (Gserv₁) provided in each destination process.

2. A communication method according to claim 1, **characterized in that** each modified first representative element (Proxy(A)) transmits messages relating to said service to the corresponding calling manager (Gclient₁) witch an identification parameter (pGserv₁) of the corresponding receiving manager (Gserv₁) in the destination process (ProServ₁) and an identification parameter (pObjA) of the destination object (ObjA).

3. A communication method according to claim 2, **characterized in that** said parameters are supplied to said first representative element (Proxy(A)) by the associated second representative element (Stub(A)) or said destination object (ObjA).

4. A communication method according to any one of claims 1 to 3, **characterized in that** the receiving manager of a destination process (ProServ₁) transmits messages received from calling managers to the objects concerned of that process.

5. A communication method according to claim 4, **characterized in that** said receiving manager receives results in response to messages that it forwards to the calling managers concerned.

6. A communication method according to any one of claims 1 to 3, characterizes in that the receiving manager (Gserv₁) for a message itself provides the corresponding service, where applicable returning a corresponding result to the calling manager concerned.

7. A communication method according to any one of claims 1 to 6, **characterized in that** messages and/or corresponding results are transmitted between a calling manager and a receiving manager by means of a pair of representative elements.

8. A communication method according to any one of claims 1 to 6, **characterized in that** messages are transmitted between a calling manager and a receiving manager using shared resources (R).

9. A communication method according to any preceding claim, **characterized in that** a calling or receiving manager modifies parameters of messages and/or corresponding results.

10. A communication method according to any preceding claim, **characterized in that** messages and/or the corresponding results are transmitted in packets between said calling and receiving managers with or without prior transformation.

11. A communication method according to claim 10, **characterized in that** said packets are transmitted cyclically in accordance with a cycle defined by said receiving or calling manager.

12. A communication method according to claim 11, **characterized in that** transmission of packets is also triggered by the occurrence of a particular event.

13. A communication method according to any preceding claim, **characterized in that** it is applied to at least one service in which said calling processes are client processes and said destination processes are server processes.

14. A communication method according to any preceding claim, **characterized in that** it is applied to at least one service in which said calling processes are server processes and said destination processes are client processes.

15. A communication method according to any preceding claim, **characterized in that** said ORB environment is a CORBA environment.

16. A communication method according to any one of claims 1 to 14, **characterized in that** said ORB environment is a DCOM environment.

17. A method of registering with a server process a client process containing a set of objects each of which objects sends a registration message, wherein said registration messages are communicated to said server process by a method as claimed in any preceding claim.

## Patentansprüche

1. Kommunikationsverfahren, das auf einem Manager für verteilte Objekte ORB basiert, wobei die Übermittlung von Meldungen von Objekten eines ersten Prozesses hin zu Objekten eines anderen Prozesses durch Repräsentantenelementepaare erfolgt, mit in jedem Paar einem ersten Repräsentantenelement im rufenden Prozess und einem zweiten Repräsentantenelement im anderen Prozess, **dadurch gekennzeichnet, dass** es darin besteht, die ersten Repräsentantenelemente (Proxy(A)) des ersten Prozesses abzuändern, damit sie die Meldungen bezüglich eines bestimmten Dienstes (SX), die von Objekten (ObjC) des ersten Prozesses (GCLIENT₁) hin zu Objekten (ObjA) anderer Prozesse (P_{ROSERV1}) gesendet werden, an eines diesem Dienst entsprechenden rufenden Manager (GCLIENT₁) übermitteln, der im ersten Prozess vorgesehen ist, wobei dieser rufende Manager die so empfangenen Meldungen managt und einige dieser Meldungen auf einen entsprechenden empfangende Manager (GSERV₁) überträgt, der jeweils in des Bestimmungsprozessen vorgesehen ist.

2. Kommunikationsverfahren gemäß Anspruch 1, **dadurch gekennzeichnet dass** jedes der abgeänderten ersten Repräsentantenelemente (Proxy(A)) die Meldungen bezüglich dieses Dienstes an den entsprechenden rufenden Manager (GCLIENT₁) mit einem Parameter zur Identifikation (pGSERV₁) des entsprechenden empfangenden Managers (GSERV₁) im Bestimmungsprozess (PROSERV₁) und einem Parameter zur Identifikation (pObjA) des Bestimmungsobjekts (ObjA) übermittelt.

3. Kommunikationsverfahren gemäß Anspruch 2, **dadurch gekennzeichnet, dass** diese Parameter dem ersten Repräsentantenelement (Proxy(A)) vom zweiten zugehörigen Repräsentantenelement (Stub(A)) oder dem Bestimmungsobjekt (ObjA) geliefert werten.

4. Kommunikationsverfahren gemäß einem der Ansprüche 1 bis 3, **dadurch gekennzeichnet, dass** der empfangende Manager eines Bestimmungsprozesses (PROSERV₁) die von rufenden Managern empfangenen Meldungen an die betreffenden Objekte dieses Prozesses übermittelt.

5. Kommunikationsverfahren gemäß Anspruch 4, **dadurch gekennzeichnet, dass** der empfangende Manager im Gegenzug zu den Meldungen Ergebnisse empfängt, die er an die betreffenden rufenden Manager weitergibt.

6. Verfahren gemäß einem der Ansprüche 1 bis 3, **dadurch gekennzeichnet, das** der empfangende Manager (GSERV₁) einer Meldung selbst den entsprechenden Dienst erbringt, wobei er gegebenenfalls ein entsprechendes Ergebnis an den betreffenden rufenden Manager zurücksendet.

7. Kommunikationsverfahren gemäß einem der Ansprüche 1 bis 6, **dadurch gekennzeichnet, dass** die Übermittlung der Meldungen und/oder der entsprechenden Ergebnisse zwischen einem rufenden Manager und einem empfangende Manager vermittels eines Repräsentantenelementepaares erfolgt.

8. Kommunikationsverfahren gemäß einem der Ansprüche 1 bis 6, **dadurch gekennzeichnet, dass** die Übermittlung der Meldungen zwischen einem rufenden Manager und einem empfangenden Manager vermittels gemeinsam benutzter Mittel (R) erfolgt.

9. Kommunikationsverfahren gemäß einem der vorstehenden Ansprüche, **dadurch gekennzeichnet, dass** ein rufender Manager oder ein empfangender Manager Parameter der Meldungen und/oder entsprechender Ergebnisse abändert.

10. Kommunikationsverfahren gemäß einem der vorstehenden Ansprüche, **dadurch gekennzeichnet, dass** die Meldungen und/oder entsprechende Ergebnisse mit oder ohne Anwendung einer vorherigen Umformung paketweise zwischen den rufenden und den empfangenden Managern übermittelt werden.

11. Kommunikationsverfahren gemäß Anspruch 10, **dadurch gekennzeichnet, dass** die Übermittlung der Pakete zyklisch entsprechend einem vom empfangenden Manager oder vom rufenden Manager definierten Zyklus erfolgt.

12. Kommunikationsverfahren gemäß Anspruch 11, **dadurch gekennzeichnet, dass** die Übermittlung der Pakete außerdem durch das Eintreten eines bestimmten Ereignisses ausgelöst wird.

13. Kommunikationsverfahren gemäß einem der vorstehenden. Ansprüche, **dadurch gekennzeichnet, dass** es auf mindestens einen Dienst angewandt wird, gemäß dem die rufenden Prozesse Client-Prozesse sind und die Bestimmungsprozesse Server-Prozesse sind.

14. Kommunikationsverfahren gemäß einem der Ansprüche 1 bis 12, **dadurch gekennzeichnet, dass** es auf mindestens einen Dienst angewandt wird, gemäß dem die rufenden Prozesse Server-Prozesse sind und die Bestimmungsprozesse Client-Prozesse sind.

15. Kommunikationsverfahren gemäß einem der vorstehenden Ansprüche, **dadurch gekennzeichnet, dass** die ORB-Umgebung eine CORBA-Umgebung ist.

16. Kommunikationsverfahren gemäß einem der Ansprüche 1 bis 14, **dadurch gekennzeichnet, dass** die ORB-Umgebung eine DCOM-Umgebung ist.

17. Verfahren zur Eintragung eines Client-Prozesses bei einem Server-Prozess, wobei dieser Client-Prozess einen Komplex von Objekten enthält und jedes dieser Objekte eine Eintragungsmeldung sendet, **dadurch gekennzeichnet, dass** diese Eintragungsmeldungen gemäß einem der vorstehenden Ansprüche diesem Server-Prozess mitgeteilt werden.
